Europäisches Patentamt

European Patent Office

Office européen des brevets

(11) Publication number: **0 025 768**

**B1**

(12) **EUROPEAN PATENT SPECIFICATION**

(45) Date of publication of patent specification: **31.10.84**

(21) Application number: **80710019.3**

(22) Date of filing: **16.08.80**

(51) Int. Cl.³: **B 60 P 1/64,** B 65 D 88/12

(54) **A transporting system comprising a vehicle with removable container.**

(30) Priority: **23.08.79 FI 792626**

(43) Date of publication of application:
**25.03.81 Bulletin 81/12**

(45) Publication of the grant of the patent:
**31.10.84 Bulletin 84/44**

(84) Designated Contracting States:
**AT CH DE FR GB IT LI NL SE**

(56) References cited:
**DE-C- 626 666**
**US-A-2 048 580**
**US-A-3 616 957**

(73) Proprietor: **Häkli, Heikki**
**SF-64720 Perälä (FI)**

(72) Inventor: **Häkli, Heikki**
**SF-64720 Perälä (FI)**

(74) Representative: **Zipse + Habersack**
**Kemnatenstrasse 49**
**D-8000 München 19 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention concerns a transporting system according to the preamble of claim 1.

In US—A—2 048 580 a transporting system is known wherein a vehicle is used, on whose support has been arranged a load containing device the bottom of which defining a cut-out with lateral supporting means extending lengthwise of the load containing device and being open at one end. A load carrier or container to be transported is elevated above the ground by means of jacks to a point slightly above the above faces of the longitudinal support means of the vehicle. Thereupon the vehicle is backed over the load carrier until the vehicle has completely enclosed the load carrier whereupon the latter is lowered by means of the jacks until the same engages and is supported along each side by the longitudinal support means. The jacks are then removed and the load is in a position to be transported, the latter forming the bottom wall of the vehicle.

The drawback encountered in this transporting system is that the load carrier, on account of the jacks being disposed underneath, has a considerable height and the loading and unloading is difficult if no loading platform is available. It is further unfavorable that under each load carrier or container to be transported jacks have to be disposed.

The transporting system according to DE—C—626 666 does not use a vehicle on whose support has been arranged a load containing space the bottom of which defining the cut-out with lateral support means. On the contrary there is provided a stationary hoist having an U-shaped frame and being open to one end, the U-frame being lowerable and raisable by jacks, whereas the vehicle which is smaller than the U-frame carries a load support whose longitudinal margins protrude over the U-frame. For unloading the vehicle is backed into the U-frame whereupon the hoist is raised until the longitudinal margins of the load carrier are seated on the U-frame. Then the vehicle is driven out and the hoist may be lowered for unloading. The loading is effected in the reverse way.

The drawback encountered in this transporting system is that on each loading or unloading site such a hoist has to be installed. Moreover only loading and unloading of vehicles having an open loading space is possible.

Therefore it is the object of the invention to provide a supporting system to be used with a vehicle having a load containing device like a container and which does not require any loading platform on the loading and unloading sites and which nevertheless enables an effective and swift loading and unloading.

The transporting system of the invention is characterized by the features stated in claim 1. A system of the invention affords many advantages over the prior art.

The transporting system of the invention renders possible a new loading system requiring no loading platforms. The load is supported on a load carrier resting on the ground or another base. The load carrier has sides which when the load carrier rests on the ground are clear from the ground. As the load containing device of the vehicle has been provided with a cut-out with lateral supporting means extending lengthwise of the device and the load containing device can be lowered and raised by means of jacks and moved lengthwise on rollers, it is possible to shift the load containing device in the horizontal plane to be in register with the load carrier and raise the load containing device so that the load carrier remains with the aid of its sides to be borne by the supporting means placed in the load containing device and thereby constitutes the bottom of the load containing space.

The stage is always hoisted up in the horizontal plane. Only one load accommodation space is required. The stage need not be loaded by conventional methods: the stage loads itself, even fully automatically and swiftly. The stage may be equally loaded in its upper position despite enclosed body design, by using a truck to drive along the ground and in through the open rear portion of the stage, to apport the goods in on the stage, carrying the goods in elevated position above the stage bottom structure. The stage of the invention renders possible a new loading system requiring no loading platforms. This "self-loading" system is appropriate for all and any goods-conveying vehicles and transport forms. Technology imposes no restrictions on the length of the load accommodation, and it is still possible always to utilize the normal load space breadth. The stage of the invention entails the possibility to transfer a load to another vehicle or carriage with open stage, and thereby the stage of the invention may be employed in the unloading and loading of common carriers. Similarly, the invention may be applied in the loading of the full trailer appended to the vehicle itself. The stage construction of the invention has light weight, and it may also be used as container hoist without extra structures or appliances whatsoever. The invention is described in the following in detail with reference being made to the attached drawings.

Fig 1 presents a transporting system of the invention, in semi-trailer embodiment, in elevational view with the container in its upper position.

Fig. 2 shows the container of Fig. 1 in elevational view, in its lower position.

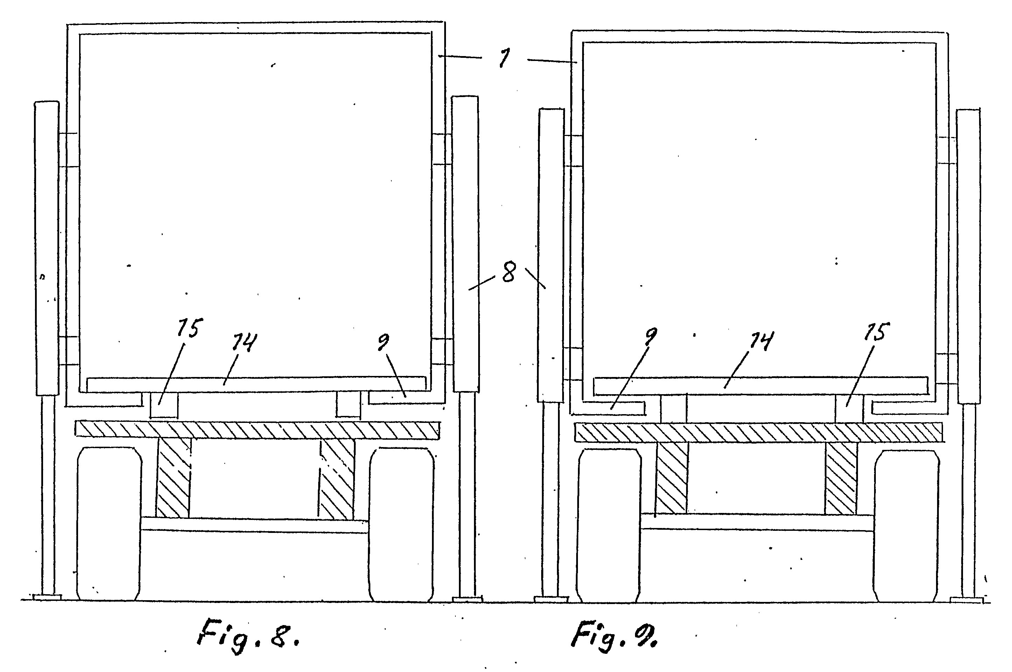

Fig. 3 shows the container position of Fig. 1, seen from the rear.

Fig. 4 displays the container position of Fig. 2, seen from the rear.

Figs. 5 and 6 show the transporting system of the invention, applied in connection with a lorry, a delivery van or a full-trailer, as seen from the rear.

Fig. 7 illustrates, viewed from the rear, the step in which the container is backed in under a load.

Figs. 8 and 9 illustrate the use of the invention when transferring a load to a conventional open-stage vehicle or onto a trailer.

Affixed to the front wall of the self-supporting container of a semi-trailer are: a main traction eye 2 and a traction eye 3 for the loading operation. To one side wall of the body 1 has been affixed a vertical tube 4, through which has been passed a rod 6 affixed to the bogie element 5. The rod lifts, by the head 7 on its upper end, the bogie which has been released from the quick locking, on one side, when the container 1 is being lifted upwardly by means of the hydraulic cylinders 8. In contiguity with the right-hand wheel of the bogie 5 has been installed an electric or hydraulic motor, from which the power is coupled to the wheel as soon as this motor is started. Once started, the motor turns the bogie about the rod 6 and tube 4 through 180 degrees.

The container 1 and the stage 9 thereto affixed constitute in combination a load containing space. In the centre of the stage 9, an open cut-out 10 has been provided. On the stage 9, grooves 11 requisite for the quick-locking action have been formed. Pins 12 mating with the grooves 11 have been mounted on the bogie 5. Rollers 13 (Fig. 4) have been installed on the lower margin of the stage 9. A load carrier 14 has been placed on beams 15. The traction car 18 carries a main traction hook 16 and a traction hook 17 for the loading operation.

The load has been placed in or on a load carrier 14, which may be a container, a load stage or equivalent. The loading of this load onto the trailer is accomplished as follows.

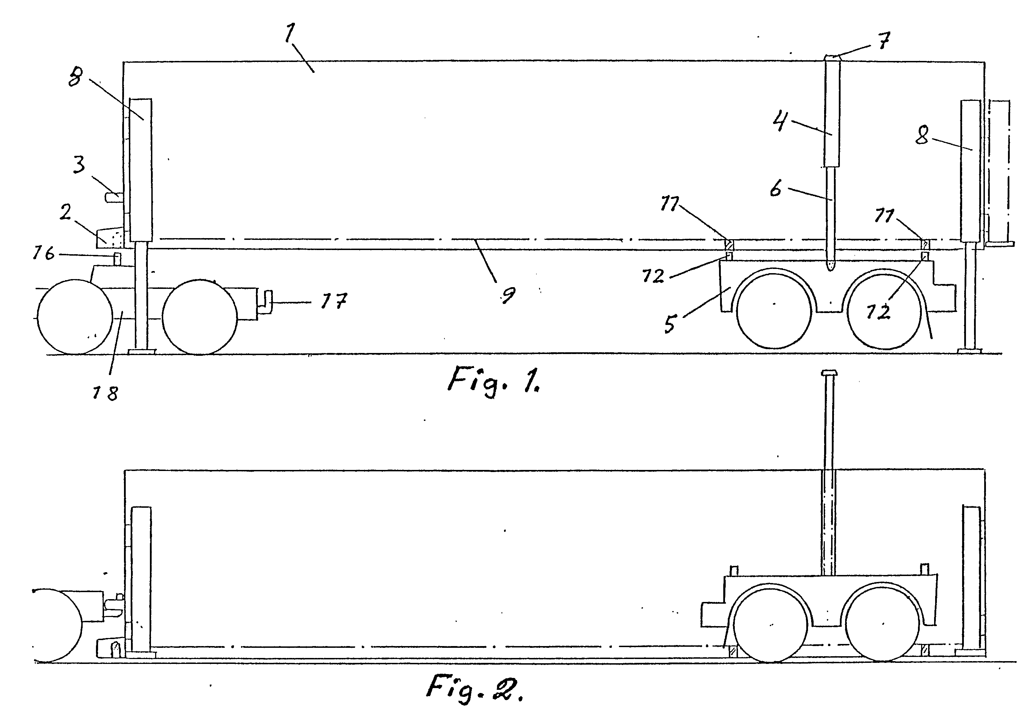

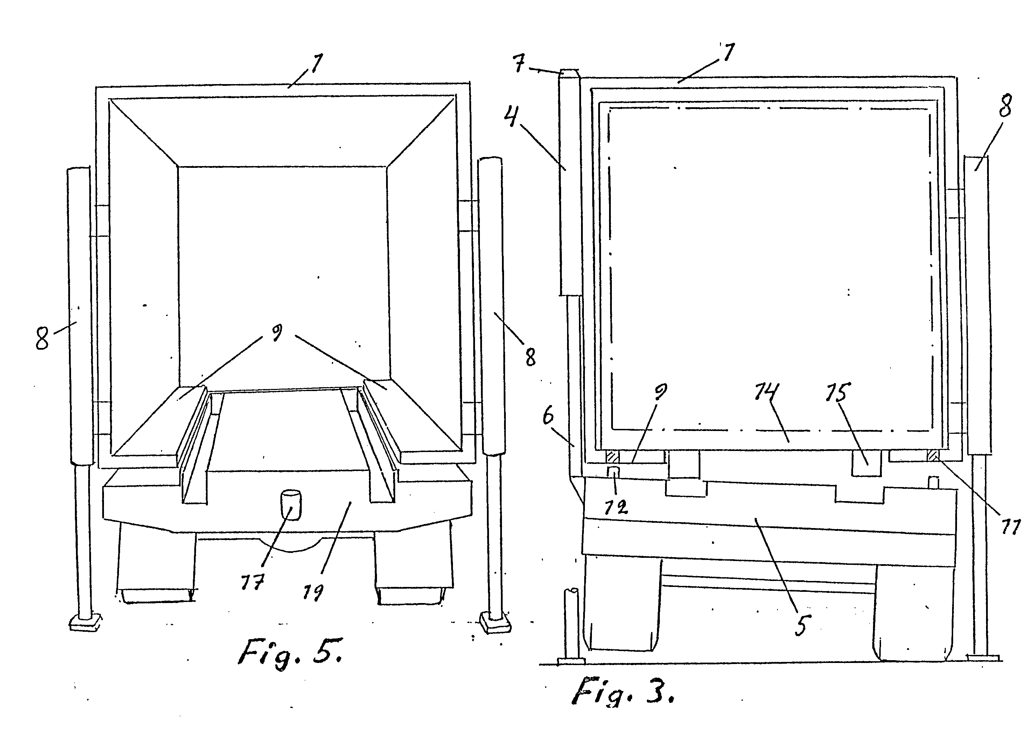

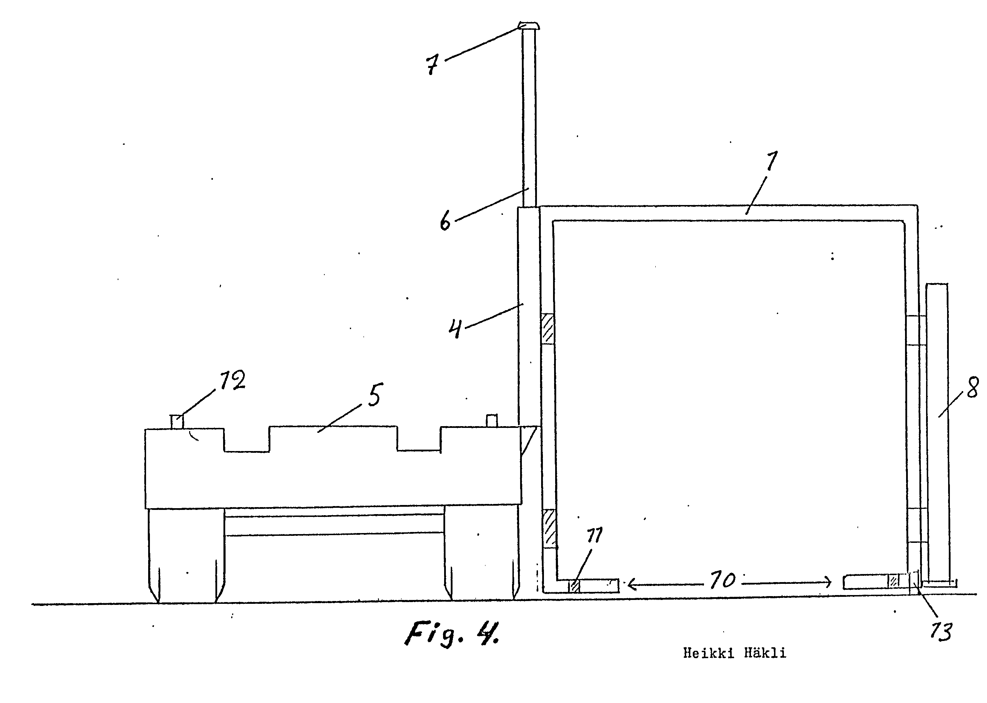

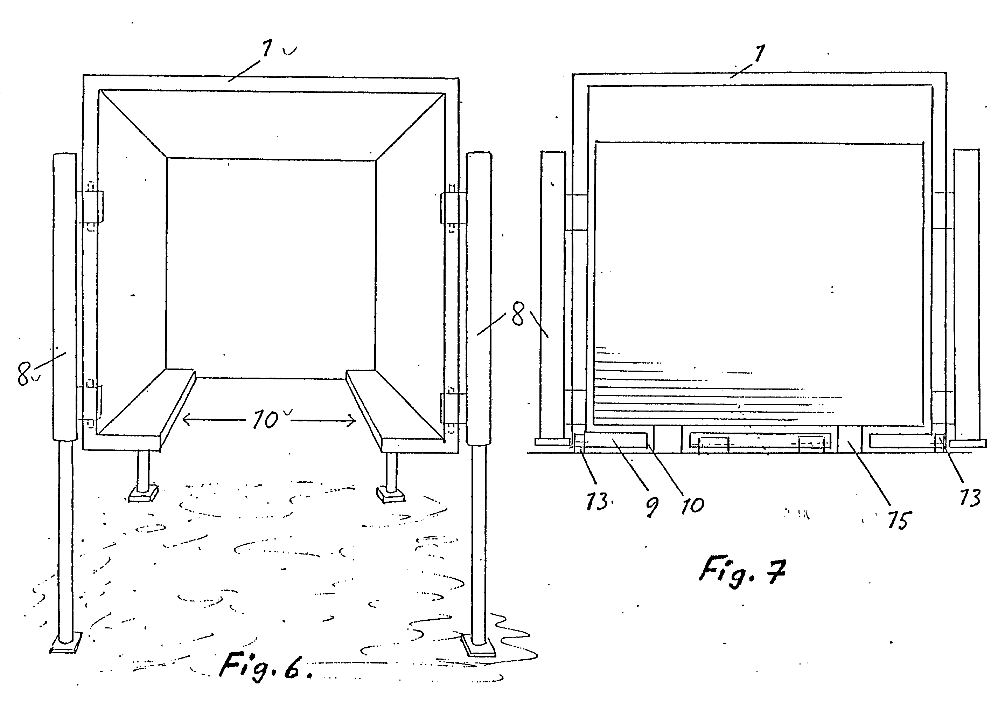

The semi-trailer is backed to be aligned with the load, about 1.5 m distant therefrom. The quicklocks of bogie 5 and traction hook 16 are released and the hydraulic cylinders 8 are swung out on the sides of the container 1. A separate control is then actuated to supply oil to the cylinders 8 and the container 1 is caused to rise so that it comes off the traction car 18 and bogie 5 and that the bogie wheels on the left side of the bogie 5 are raised clear from the ground. The traction car 18 is driven out from under the container 1, the motor on the bogie 5 is started for turning the bogie and it is stopped when the bogie 5 has turned through 180 degree (Figs. 2 and 4). Oil is drained from the cylinders 8 until this draining is suspended when the container 1 is 10 cm over the ground, when the traction car 18 is backed to contact the body, whereupon all oil is drained from the cylinders 8. This will cause the container 1 to be coupled to the traction hook 17. The door in the rear of the container 1 is now opened. Now the self-loading is commenced by slowly backing with the traction car 18 the stage 9 in under the load carrier that has to be taken up. Next, the rear door of the container 1 is closed and oil is sent to the cylinders 8. The container 1 will rise to its upper position and the load will automatically be deposited on the stage. The beams 15 are removed from under the stage 9. The motor on the bogie 5 is reversed and operated to turn the bogie 5 through 180 degrees and in under the stage 9. The traction car 18 is driven in under the container 1, the quicklocks on the traction hook 16 and on the bogie 5 are secured and the piston tubes of the cylinders 8 are run up, and the hydraulic cylinders 8 folded down on the end walls, whereafter the semi-trailer is ready to be transported. For removal of the load from the stage 9, the above steps are carried out in reverse order.

If, according to a second embodiment of the invention (Fig. 8 and 9), it is desired to shift a load over to another vehicle or trailer with open stage, beams 15 have to be placed under the load for instance a container and said other the vehicle or trailer is backed in under the raised stage 9 of a vehicle formed according to the present invention. The stage 9 is then lowered enough to set the stage 9 free from the load carrier but still clearing the stage of the other vehicle or trailer. The load has thus been transferred onto the vehicle or trailer, and the vehicle or trailer can be driven out from under the stage 9.

Similarly, in order to transfer a load from a vehicle or trailer with open stage to a vehicle furnished with a stage 9 according to the present invention, the same steps are performed in reverse.

As shown in Figs. 5, 6 and 7, the container 1 furnished with a stage 9 according to a third embodiment of the invention may be loaded on a lorry 19, a delivery van or a full-trailer. In that case, naturally, the special components 2, 4, 5, 6 and 7 of Fig. 1 are not required. For loading, the stage 9 is backed up to be under the load 14 (Fig. 7) and it is raised aloft with the hydraulic cylinders 8 (Fig. 6) and the vehicle 19 backed in under the stage 9, whereupon the stage 9 is lowered to rest upon the vehicle 19 (Fig. 5). Unloading involves the same steps in reversed order.

A substantial feature of the system of the invention is that it is possible to employ standard axle designs and conventional lorries and delivery vans.

Instead of beams 15, there may be provided as load-raising members, for instance a specific loading platform, or low legs or castor wheels, etc (Fig. 7).

**Claims**

1. A transporting system, comprising a vehicle, for instance a lorry and/or trailer, on whose support has been arranged a load containing device, e.g. a container (1) which can for the purpose of loading and unloading be moved forwardly and rearwardly, the bottom of said container (1) defining a cut-out (10) with lateral supporting means (9) extending lengthwise of the container (1) and being open at at least one end, the system further comprising at least one load carrier (14) with sides wider than the cut-out, which sides when the load carrier rests on the ground or on another base are clear from the ground or base respectively and are adapted to be borne by said supporting means (9) or the container (1) whereby the load carrier (14) constitutes the bottom of the container (1), characterized in that the container (1) is provided with jacks (8) for lowering and raising the container and with rollers (13) for moving it lengthwise on the ground after being lowered.

2. A transporting system according to claim 1, characterized in that the load carrier (14) contains a plurality of separate subunits.

3. A transporting system, according to claim 1 or 2, wherein the container has a roof and the cut-out (10) extends the whole length of the container (1), characterized in that the container (1) is fitted with doors at both ends.

4. A transporting system according to claim 1, whereby the vehicle is a full-trailer, characterized in that the container (1) constitutes a self-supporting chassis structure and has been detachably disposed on the chassis of said full-trailer (Fig. 5, 6 and 7).

5. A transporting system according to claim 1, whereby the vehicle is a semi-trailer, characterized in that the container (1) constitutes a self-supporting chassis structure and that the bogie element (5) is detachable from the container (1) so that after detachment the bogie element (5) can be turned about a vertical pivotal member (4, 6) disposed on one side of the container (1), this enabling the container to be lowered down for taking up a load or for unloading (Fig. 1—4).

**Revendications**

1. Un système de transport comprenant un véhicule, par exemple un camion et/ou une remorque, sur le support duquel a été monté un dispositif contenant des charges, tel qu'un conteneur (1) qui peut pour le but de chargement et de déchargement être placé vers l'avant et vers l'arrière, le fond dudit récipient (1) définissant une découpe (10) avec des moyens latéraux de support (9) s'étendant longitudinalement au conteneur (1) et étant ouvert à au moins une extrémité, le système comprenant en outre au moins un porte-charge (14) avec des côtés plus larges que la découpe, lesquels côtés, lorsque le porte-charge repose sur le sol ou sur une autre base, sont hors de contact avec le sol ou la base, respectivement et sont prévus pour être portés par lesdits moyens de support (9) du conteneur (1) de sorte que le porte-charge (14) constitue le fond du conteneur (1), caractérisé en ce que le conteneur (1) est muni de vérins (8) pour abaisser et lever le conteneur et de galets de roulement (13) pour le déplacer longitudinalement sur le sol après être abaissé.

2. Un système de transport selon la revendication 1, caractérisé en ce que le porte-charge (14) contient plusieurs sous-ensembles distincts.

3. Un système de transport selon la revendication 1 ou 2, dans lequel le conteneur présente un toit et la découpe (10) s'étend sur toute la longueur du conteneur (1), caractérisé en ce que le conteneur (1) est muni de portes aux deux extrémités.

4. Un système de transport selon la revendication 1, par lequel le véhicule est une remorque, caractérisé en ce que le conteneur (1) constitue une structure de châssis auto-portante et a été placé de manière amovible sur le châssis de ladite remorque (fig. 5, 6 et 7).

5. Un système de transport selon la revendication 1, par lequel le véhicule est une semi-remorque, caractérisé en ce que le conteneur (1) constitue une structure à châssis auto-portante et en ce que l'élément de boggie (5) peut être détaché du conteneur (1) de sorte qu'après détachement, l'élément de boggie (5) peut étre tourné autour d'un élément de pivotement vertical (4, 6) placé sur un côté du conteneur (1), ceci permettant au conteneur d'être abaissé pour prendre une charge ou pour décharger (fig. 1—4).

**Patentansprüche**

1. Transportsystem, bestehend aus einem Fahrzeug wie einem Lastkraftwagen und/oder Anhänger, auf dessen Tragteil ein Ladungsbehältnis wie zum Beispiel ein Behälter (1) angeordnet ist, der zum Beladen und Entladen vorwärts und rückwärts bewegt werden kann, wobei der Boden dieses Behälters (1) einen Ausschnitt (10) mit seitlichen Trageinrichtungen (9) aufweist, die sich in Längsrichtung des Behälters (1) erstrecken und an zumindest einem Ende offen sind, welches System außerdem zumindest einen Ladungsträger (14) mit breiteren Seiten als der Ausschnitt aufweist, welche Seiten bei auf dem Boden oder auf einer anderen Unterlage aufruhendem Ladungsträger vom Boden bzw. von der Unterlage abgehoben sind und dazu vorgesehen sind, von den Trageinrichtungen (9) des Behälters (1) getragen zu werden, wodurch der Ladungsträger (14) den Boden des Behälters (1) bildet, dadurch gekennzeichnet, daß der Behälter (1) mit Hebern (8) zum Absenken und Anheben des Behälters sowie mit Rollen (13) versehen ist, um ihn nach dem Absenken in Längsrichtung auf dem Boden zu bewegen.

2. Transportsystem nach Anspruch 1, dadurch gekennzeichnet, daß der Ladungsträger (14) eine Mehrzahl separater Untereinheiten aufweist.

3. Transportsystem nach Anspruch 1 oder 2, bei dem der Behälter ein Dach hat und der Ausschnitt (10) sich über die gesamte Länge des Behälters (1) erstreckt, dadurch gekennzeichnet, daß der behälter (1) mit Türen ausgerüstet ist.

4. Transportsystem nach Anspruch 1, wobei das Fahrzeug ein Vollanhänger ist, dadurch gekennzeichnet, daß der Behälter (1) einen selbsttragenden Aufbau besitzt und er abnehmbar auf dem Gestell des Vollanhängers angeordnet ist (Figuren 5, 6 und 7).

5. Transportsystem nach Anspruch 1, wobei das Fahrzeug ein Sattelanhänger ist, dadurch gekennzeichnet, daß der Behälter (1) einen selbsttragenden Aufbau besitzt, und daß der Fahrschemel (5) von dem Behälter (1) lösbar ist, so daß nach Lösen der Drehschemel (5) um ein an einer Seite des Behälters (1) angeordnetes vertikales Drehglied (4, 6) gedreht werden kann, so daß der Behälter zur Aufnahme einer Ladung oder zum Entladen abgesenkt werden kann (Figuren 1—4).

Fig. 1.

Fig. 2.

0 025 768

Fig. 3.

Fig. 5.

Fig. 4.

Heikki Häkli

0 025 768

Fig. 6.

Fig. 7

0 025 768

Fig. 9.

Fig. 8.